# EUROPEAN PATENT APPLICATION

(11) **EP 4 583 293 A1**
(43) Date of publication of application: **09.07.2025**
(21) Application number: 23860141.3
(22) Date of filing: 22.08.2023
(51) Int. Cl.: H01M 50/443, C08F 220/10, H01G 11/52, H01M 4/13, H01M 50/414, H01M 50/423, H01M 50/434, H01M 50/446, H01M 50/449, H01M 50/451, H01M 50/489

(54) **COMPOSITION FOR ELECTROCHEMICAL ELEMENT FUNCTIONAL LAYER, FUNCTIONAL LAYER FOR ELECTROCHEMICAL ELEMENT, LAMINATE FOR ELECTROCHEMICAL ELEMENT, AND ELECTROCHEMICAL ELEMENT**

(30) Priority: 31.08.2022 JP 2022138721
(71) Applicant: Zeon Corporation, Tokyo 100-8246 (JP)
(72) Inventor: ADACHI, Yusuke, Tokyo 100-8246 (JP)
(74) Representative: Maiwald GmbH
(86) International application number: PCT/JP2023/030208
(87) International publication number: WO 2024/048378

(57) **Abstract**

Provided is a composition for an electrochemical device functional layer with which it is possible to form a functional layer that has excellent wet adhesiveness and that is capable of good inhibition of metal deposition on an electrode during charging and discharging. The composition for an electrochemical device functional layer contains a particulate polymer. The particulate polymer includes a cycloalkyl group-containing monomer unit and at least one monomer unit (A) selected from the group consisting of a glycidyl group-containing monomer unit, an acetyl group-containing monomer unit, and an amide group-containing monomer unit. The particulate polymer has a volume-average particle diameter of not less than 1.0 µm and not more than 10.0 µm.

## Description

### TECHNICAL FIELD

The present disclosure relates to a composition for an electrochemical device functional layer, a functional layer for an electrochemical device, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

Constituent members that include a porous membrane layer for improving heat resistance and strength, an adhesive layer for adhering battery members to each other, or the like (hereinafter, such layers are referred to using the general term "functional layer") are used in electrochemical devices such as lithium ion secondary batteries. Specifically, electrodes that further include a functional layer formed on an electrode substrate in which an electrode mixed material layer is provided on a current collector and separators that include a functional layer formed on a separator substrate are used as battery members. In recent years, further improvements to functional layers have been studied with the aim of further increasing the performance of electrochemical devices such as lithium ion secondary batteries. As one specific example, Patent Literature (PTL) 1 proposes forming a functional layer that can display excellent adhesiveness by using a composition for a functional layer that contains inorganic particles and a particulate polymer including a cycloalkyl group-containing monomer unit in a specific proportion.

### CITATION LIST

### Patent Literature

PTL 1: JP2016-213019A

### SUMMARY

### (Technical Problem)

However, there is room for further improvement of a functional layer obtained according to the conventional technique described above in terms of adhesiveness after immersion in electrolyte solution (hereinafter, also referred to as "wet adhesiveness"). In addition, an electrochemical device such as a battery that includes a functional layer obtained according to the conventional technique described above suffers from a problem that deposition of metal such as lithium on an electrode during charging and discharging cannot be sufficiently inhibited and that short-circuiting between electrodes caused by metal deposition cannot be sufficiently inhibited.

Accordingly, one object of the present disclosure is to provide a composition for an electrochemical device functional layer with which it is possible to form a functional layer that has excellent wet adhesiveness and that is also capable of good inhibition of metal deposition on an electrode during charging and discharging. Another object of the present disclosure is to provide a functional layer for an electrochemical device that has excellent wet adhesiveness and that is also capable of good inhibition of metal deposition on an electrode during charging and discharging. Another object of the present disclosure is to provide a laminate for an electrochemical device in which this functional layer for an electrochemical device is stacked. Another object of the present disclosure is to provide an electrochemical device including this laminate for an electrochemical device.

### (Solution to Problem)

The inventor made diligent studies to achieve the foregoing objects. The inventor reached a new finding that the problems set forth above can be solved with a composition for an electrochemical device functional layer containing a particulate polymer that includes a cycloalkyl group-containing monomer unit and at least one among a glycidyl group-containing monomer unit, an acetyl group-containing monomer unit, and an amide group-containing monomer unit and that has a volume-average particle diameter within a specific range. In this manner, the inventor completed the present disclosure.

Specifically, with the aim of advantageously solving the problems set forth above, [1] a presently disclosed composition for an electrochemical device functional layer comprises a particulate polymer, wherein the particulate polymer includes a cycloalkyl group-containing monomer unit and at least one monomer unit (A) selected from the group consisting of a glycidyl group-containing monomer unit, an acetyl group-containing monomer unit, and an amide group-containing monomer unit, and the particulate polymer has a volume-average particle diameter of not less than 1.0 µm and not more than 10.0 µm.

With a composition for an electrochemical device functional layer such as set forth above, it is possible to form a functional layer that has excellent wet adhesiveness and that inhibits metal deposition on an electrode during charging and discharging.

Note that it is possible to judge whether or not a particulate polymer includes a specific monomer unit using a nuclear magnetic resonance (NMR) method such as ¹H-NMR. Moreover, when a particulate polymer is said to "include a monomer unit", this means that "a particulate polymer obtained using that monomer includes a repeating unit derived from the monomer".

Also note that the "volume-average particle diameter of a particulate polymer" referred to in the present specification can be measured by a method described in the EXAMPLES section of the present specification.

[2] In the composition for an electrochemical device functional layer according to the foregoing [1], the particulate polymer preferably has a glass-transition temperature of not lower than 0°C and not higher than 90°C.

When the glass-transition temperature of the particulate polymer is not lower than the lower limit set forth above, destabilization of polymer particles during production of the particulate polymer and coarsening of some of these particles can be inhibited. On the other hand, when the glass-transition temperature of the particulate polymer is not higher than the upper limit set forth above, wet adhesiveness of an obtained functional layer can be further improved.

Note that the "glass-transition temperature of a particulate polymer" referred to in the present specification can be measured by a method described in the EXAMPLES section of the present specification.

[3] In the composition for an electrochemical device functional layer according to the foregoing [1] or [2], the particulate polymer preferably includes the cycloalkyl group-containing monomer unit in a proportion of not less than 51 mass% and not more than 99 mass%.

When the particulate polymer includes the cycloalkyl group-containing monomer unit in a proportion that is not less than the lower limit set forth above, destabilization of polymer particles during production of the particulate polymer and coarsening of some of these particles can be inhibited. On the other hand, when the particulate polymer includes the cycloalkyl group-containing monomer unit in a proportion that is not more than the upper limit set forth above, metal deposition on an electrode during charging and discharging can be further inhibited.

The proportional content of a monomer unit in a particulate polymer referred to in the present specification means the proportion constituted by that monomer unit when the amount of all monomer units included in the particulate polymer is taken to be 100 mass%. Moreover, the proportional content (mass%) of each monomer unit referred to in the present disclosure can be measured using a nuclear magnetic resonance (NMR) method such as ¹H-NMR.

[4] In the composition for an electrochemical device functional layer according to any one of the foregoing [1] to [3], the particulate polymer preferably has a degree of swelling in electrolyte solution of not less than 100% and not more than 500%.

When the degree of swelling in electrolyte solution of the particulate polymer is not less than the lower limit set forth above, wet adhesiveness of an obtained functional layer can be further improved, and cycle characteristics of an obtained electrochemical device can also be improved. On the other hand, when the degree of swelling in electrolyte solution of the particulate polymer is not more than the upper limit set forth above, cycle characteristics of an obtained electrochemical device can be improved.

Note that the "degree of swelling in electrolyte solution of a particulate polymer" referred to in the present specification can be measured by a method described in the EXAMPLES section of the present specification.

[5] The composition for an electrochemical device functional layer according to any one of the foregoing [1] to [4] preferably further comprises heat-resistant particles. When the composition for an electrochemical device functional layer further contains heat-resistant particles, a functional layer having excellent heat resistance can be formed, and heat resistance of an electrochemical device can be increased.

Moreover, with the aim of advantageously solving the problems set forth above, [6] a presently disclosed functional layer for an electrochemical device is formed using the composition for an electrochemical device functional layer according to any one of the foregoing [1] to [5].

A functional layer for an electrochemical device such as set forth above has excellent wet adhesiveness and can also inhibit metal deposition on an electrode during charging and discharging.

[7] In a functional layer for an electrochemical device formed using the composition for an electrochemical device functional layer according to the foregoing [5], it is preferable that the functional layer for an electrochemical device has a structure in which the particulate polymer is partially embedded in a heat-resistant particle layer containing the heat-resistant particles and that a ratio of a number-average particle diameter of the particulate polymer relative to thickness of the heat-resistant particle layer is not less than 1.0 and not more than 5.0.

When the ratio of the number-average particle diameter of the particulate polymer relative to the thickness of the heat-resistant particle layer is not less than the lower limit set forth above, even better wet adhesiveness can be displayed because it is even easier for the particulate polymer to protrude relative to the surface of the heat-resistant particles at a thickness direction surface of the functional layer. On the other hand, when the ratio of the number-average particle diameter of the particulate polymer relative to the thickness of the heat-resistant particle layer is not more than the upper limit set forth above, good wet adhesiveness can be displayed, and metal deposition on an electrode during charging and discharging can also be further inhibited due to there being a larger number of adhesion points of the particulate polymer.

Note that the "thickness of a heat-resistant particle layer" referred to in the present specification can be measured by a method described in the EXAMPLES section of the present specification.

Also note that the "number-average particle diameter of a particulate polymer" in a functional layer is determined by the following method. First, a cross-section polisher is used to section a functional layer-equipped separator (laminate) in a stacking direction. Next, a field emission scanning electron microscope (FE-SEM) is used to observe the laminate cross-section from a direction perpendicular thereto, the diameters of 20 particles of the particulate polymer are measured from an obtained image, and an average value of the particle diameters is calculated. The calculated average value is taken to be the number-average particle diameter of the particulate polymer in the functional layer.

[8] A presently disclosed laminate for an electrochemical device comprises the functional layer for an electrochemical device according to the foregoing [6] or [7], stacked on a substrate.

A laminate for an electrochemical device such as set forth above can inhibit metal deposition on an electrode during charging and discharging. Moreover, a laminate for an electrochemical device such as set forth above can improve cycle characteristics of an electrochemical device including the laminate for an electrochemical device.

[9] A presently disclosed electrochemical device comprises the laminate for an electrochemical device according to the foregoing [8].

An electrochemical device such as set forth above can display excellent cycle characteristics.

### (Advantageous Effect)

According to the present disclosure, it is possible to provide a composition for an electrochemical device functional layer with which it is possible to form a functional layer that has excellent wet adhesiveness and that also inhibits metal deposition on an electrode during charging and discharging. Moreover, according to the present disclosure, it is possible to provide a functional layer for an electrochemical device that has excellent wet adhesiveness and that also inhibits metal deposition on an electrode during charging and discharging. Furthermore, according to the present disclosure, it is possible to provide a laminate for an electrochemical device in which this functional layer for an electrochemical device is stacked. Also, according to the present disclosure, it is possible to provide an electrochemical device including this laminate for an electrochemical device.

### DETAILED DESCRIPTION

The following provides a detailed description of embodiments of the present disclosure. The presently disclosed composition for an electrochemical device functional layer can be used in formation of a functional layer for an electrochemical device that is included in the presently disclosed laminate for an electrochemical device. Moreover, the presently disclosed laminate for an electrochemical device includes a functional layer that has been formed using the presently disclosed composition for an electrochemical device functional layer. Furthermore, the presently disclosed electrochemical device includes at least the presently disclosed laminate for an electrochemical device.

### (Composition for electrochemical device functional layer)

The presently disclosed composition for an electrochemical device functional layer contains a specific particulate polymer and can optionally further contain one or more components selected from the group consisting of a binder, heat-resistant particles, other components, and a dispersion medium. By using the presently disclosed composition for a functional layer, it is possible to form a functional layer for an electrochemical device that has excellent wet adhesiveness and that is also capable of good inhibition of metal deposition on an electrode during charging and discharging. Note that the presently disclosed composition for a functional layer is normally a slurry composition having the aforementioned components dispersed in a dispersion medium such as water.

### <Particulate polymer>

As described in detail below, the particulate polymer that is contained in the composition for a functional layer includes specific monomer units, has a volume-average particle diameter within a specific range, and is a polymer that has a particulate form in the composition for a functional layer. Note that the particulate polymer may have a particulate form or may have any other form after members have been adhered via a functional layer formed using the composition for a functional layer. Moreover, the particulate polymer may be a crystalline macromolecular polymer, an amorphous macromolecular polymer, or a mixture thereof.

### [Volume-average particle diameter]

The particulate polymer has a volume-average particle diameter of not less than 1.0 µm and not more than 10.0 µm.

When the volume-average particle diameter of the particulate polymer is not less than the lower limit set forth above, this makes it easier for the particulate polymer to protrude relative to materials other than the particulate polymer and to come into contact with a battery member at a thickness direction surface of a functional layer formed using the composition for a functional layer, and, as a result, the functional layer can display excellent wet adhesiveness. Moreover, when the volume-average particle diameter of the particulate polymer is not less than the lower limit set forth above, destabilization of polymer particles during production of the particulate polymer and coarsening of some of these particles can be inhibited. On the other hand, when the volume-average particle diameter of the particulate polymer is not more than the upper limit set forth above, metal deposition on an electrode during charging and discharging can be inhibited, and cycle characteristics of an obtained electrochemical device can also be improved.

The volume-average particle diameter of the particulate polymer is preferably 1.2 µm or more, more preferably 1.5 µm or more, and even more preferably 2.0 µm or more, and is preferably 9.0 µm or less, and more preferably 8.5 µm or less. Note that the volume-average particle diameter of the particulate polymer can be adjusted through the type and amount of metal hydroxide used in production of the particulate polymer and through the production method and production conditions of the particulate polymer.

### [Degree of swelling in electrolyte solution]

The degree of swelling in electrolyte solution of the particulate polymer is preferably 100% or more, more preferably 110% or more, and even more preferably 120% or more, and is preferably 500% or less, more preferably 400% or less, and even more preferably 300% or less.

When the degree of swelling in electrolyte solution of the particulate polymer is not less than any of the lower limits set forth above, wet adhesiveness of an obtained functional layer can be further improved, and cycle characteristics of an obtained electrochemical device can also be improved. On the other hand, when the degree of swelling in electrolyte solution of the particulate polymer is not more than any of the upper limits set forth above, cycle characteristics of an obtained electrochemical device can be improved.

### [Glass-transition temperature]

The glass-transition temperature of the particulate polymer is preferably 0°C or higher, more preferably 20°C or higher, and even more preferably 30°C or higher, and is preferably 90°C or lower, more preferably 87°C or lower, and even more preferably 75°C or lower.

When the glass-transition temperature of the particulate polymer is not lower than any of the lower limits set forth above, destabilization of polymer particles during production of the particulate polymer and coarsening of some of these particles can be inhibited. On the other hand, when the glass-transition temperature of the particulate polymer is not higher than any of the upper limits set forth above, wet adhesiveness of an obtained functional layer can be further improved.

### [Amount of coarse particles]

The amount of coarse particles among the particulate polymer that is contained in the composition for a functional layer is preferably less than 1.0 mass%, and more preferably less than 0.1 mass%.

The amount of coarse particles among the particulate polymer can be measured by a method described in the EXAMPLES section of the present specification.

### [Chemical composition of polymer]

The particulate polymer includes a cycloalkyl group-containing monomer unit and at least one monomer unit (A) selected from the group consisting of a glycidyl group-containing monomer unit, an acetyl group-containing monomer unit, and an amide group-containing monomer unit, and can optionally further include other monomer units.

### -Cycloalkyl group-containing monomer unit-

The cycloalkyl group-containing monomer unit may be a monomer unit derived from a monomer that includes at least one ethylenically unsaturated bond and at least one cycloalkyl group, for example, but is not specifically limited thereto. Specifically, cycloalkyl group-containing monomers that include one ethylenically unsaturated bond and one cycloalkyl group, for example, may be used without any specific limitations as cycloalkyl group-containing monomers that can form a cycloalkyl group-containing monomer unit. Examples of cycloalkyl group-containing monomers that include one ethylenically unsaturated bond and one cycloalkyl group include vinylcyclopentane, vinylcyclohexane, vinylepoxycyclohexane, and cycloalkyl group-containing (meth)acrylic acid ester monomers. In particular, cycloalkyl group-containing (meth)acrylic acid ester monomers are preferable.

Note that in the present disclosure, "(meth)acryl" is used to indicate "acryl" and/or "methacryl".

Also note that in the present specification, a monomer that includes a cycloalkyl group and also includes at least one functional group (A) selected from the group consisting of a glycidyl group, an acetyl group, and an amide group is considered to form a cycloalkyl group-containing monomer unit.

Examples of cycloalkyl group-containing (meth)acrylic acid ester monomers include cycloalkyl acrylates such as acrylic acid ester monomers that include a monocyclic cycloalkyl group (cyclohexyl acrylate, cyclohexylmethyl acrylate, menthyl acrylate, 2,2,5-trimethylcyclohexyl acrylate, etc.), acrylic acid ester monomers that include a bicyclic cycloalkyl group (norbornyl acrylate, norbornylmethyl acrylate, bornyl acrylate, isobornyl acrylate, fenchyl acrylate, etc.), and acrylic acid ester monomers that include a cycloalkyl group having three or more rings (adamantyl acrylate, tricyclo[5,2,1,0^{2,6}]decan-8-yl acrylate, tricyclo[5,2,1,0^{2,6}]decan-3 (or 4)-ylmethyl acrylate, etc.); and cycloalkyl methacrylates such as methacrylic acid ester monomers that include a monocyclic cycloalkyl group (cyclohexyl methacrylate, cyclohexylmethyl methacrylate, menthyl methacrylate, 2,2,5-trimethylcyclohexyl methacrylate, etc.), methacrylic acid ester monomers that include a bicyclic cycloalkyl group (norbornyl methacrylate, norbornylmethyl methacrylate, bornyl methacrylate, isobornyl methacrylate, fenchyl methacrylate, etc.), and methacrylic acid ester monomers that include a cycloalkyl group having three or more rings (adamantyl methacrylate, tricyclo[5,2, 1,0^{2,6}]decan-8-yl methacrylate, tricyclo[5,2,1,0^{2,6}]decan-3 (or 4)-ylmethyl methacrylate, etc.). These cycloalkyl group-containing (meth)acrylic acid ester monomers can be used individually or as a combination of two or more types.

Of the examples listed above, a monomer in which the number of carbons included in an alicyclic structure is 6 is preferable as a cycloalkyl group-containing (meth)acrylic acid ester monomer. Note that the "number of carbons included in an alicyclic structure" that is referred to in the present specification means the number of ring-forming carbons in the alicyclic structure and, in a case in which the alicyclic structure has a substituent, does not include the number of carbon atoms included in the substituent.

When the number of carbons included in the alicyclic structure is 6, destabilization of polymer particles during production of the particulate polymer and coarsening of some of these particles can be inhibited.

Specifically, of the monomers listed above, a (meth)acrylic acid ester monomer that includes a monocyclic cycloalkyl group is preferable as a cycloalkyl group-containing (meth)acrylic acid ester monomer from a viewpoint of inhibiting destabilization of polymer particles during production of the particulate polymer and coarsening of some of these particles. In particular, cyclohexyl acrylate (number of carbons included in alicyclic structure: 6) and cyclohexyl methacrylate (number of carbons included in alicyclic structure: 6) are preferable, and cyclohexyl methacrylate (number of carbons included in alicyclic structure: 6) is more preferable as a cycloalkyl group-containing (meth)acrylic acid ester monomer.

The proportional content of a cycloalkyl group-containing monomer unit in the particulate polymer when the amount of all monomer units in the particulate polymer is taken to be 100 mass% is preferably 51 mass% or more, more preferably 55 mass% or more, and even more preferably 60 mass% or more, and is preferably 99 mass% or less, more preferably 95 mass% or less, and even more preferably 90 mass% or less.

When the particulate polymer includes a cycloalkyl group-containing monomer unit in a proportion that is not less than any of the lower limits set forth above, destabilization of polymer particles during production of the particulate polymer and coarsening of some of these particles can be inhibited. On the other hand, when the particulate polymer includes a cycloalkyl group-containing monomer unit in a proportion that is not more than any of the upper limits set forth above, metal deposition on an electrode during charging and discharging can be inhibited.

### -Monomer unit (A)-

The particulate polymer includes a monomer unit (A). Note that in the present specification, a monomer that includes a glycidyl group and that also includes either or both of an acetyl group and an amide group is considered to form a glycidyl group-containing monomer unit. Moreover, a monomer that includes an acetyl group and an amide group is considered to form an acetyl group-containing monomer unit.

Examples of glycidyl group-containing monomers that can form a glycidyl group-containing monomer unit include, but are not specifically limited to, allyl glycidyl ether, glycidyl (meth)acrylate, epoxy-9-decene, and epoxy-5-hexene. Note that in the present disclosure, "(meth)acrylate" is used to indicate "acrylate" and/or "methacrylate".

In particular, from a viewpoint of inhibiting metal deposition on an electrode during charging and discharging and also further improving wet adhesiveness of an obtained functional layer, glycidyl acrylate and glycidyl methacrylate are preferable, and glycidyl methacrylate is more preferable as a glycidyl group-containing monomer that can form a glycidyl group-containing monomer unit.

Examples of acetyl group-containing monomers that can form an acetyl group-containing monomer unit include, but are not specifically limited to, vinyl acetate, allyl acetate, dimethylallyl acetate, and isopropenylallyl acetate.

In particular, from a viewpoint of further improving wet adhesiveness of an obtained functional layer, vinyl acetate is preferable as an acetyl group-containing monomer that can form an acetyl group-containing monomer unit.

Examples of amide group-containing monomer that can form an amide group-containing monomer unit include N-vinylacetamide, (meth)acrylamide, N-methylol(meth)acrylamide, N-ethyloldimethyl(meth)acrylamide, N-propyloldimethyl(meth)acrylamide, N-butyroldimethyl(meth)acrylamide, diethyl(meth)acrylamide, N-methoxymethyl(meth)acrylamide, and dimethylaminopropyl(meth)acrylamide.

In particular, from a viewpoint of further improving wet adhesiveness of an obtained functional layer, methacrylamide and acrylamide are preferable, and acrylamide is more preferable as an amide group-containing monomer that can form an amide group-containing monomer unit.

The proportional content of the monomer unit (A) in the particulate polymer when the amount of all monomer units in the particulate polymer is taken to be 100 mass% is preferably 1 mass% or more, more preferably 2 mass% or more, and even more preferably 5 mass% or more, and is preferably 49 mass% or less, more preferably 44 mass% or less, and even more preferably 40 mass% or less.

When the particulate polymer includes the monomer unit (A) in a total proportion that is not less than any of the lower limits set forth above, metal deposition on an electrode during charging and discharging can be further inhibited, and wet adhesiveness of an obtained functional layer can be further improved. When the particulate polymer includes the monomer unit (A) in a total proportion that is not more than any of the upper limits set forth above, destabilization of polymer particles during production of the particulate polymer and coarsening of some of these particles can be inhibited.

### -Other monomer units-

Examples of other monomer units include, but are not specifically limited to, a cross-linkable monomer unit, an aromatic monovinyl monomer unit, and a mono(meth)acrylic acid ester monomer unit.

Examples of cross-linkable monomers that can form a cross-linkable monomer unit include polyfunctional monomers having two or more groups displaying polymerization reactivity in the monomer.

Examples of such polyfunctional monomers include (meth)acrylic acid allyl ester monomers such as allyl methacrylate; aromatic divinyl monomers such as divinylbenzene and divinylnaphthalene; di(meth)acrylic acid ester monomers such as diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; and conjugated diene monomers such as 1,3-butadiene, isoprene, 2,3-dimethyl-1,3-butadiene, and 1,3-pentadiene.

Di(meth)acrylic acid ester monomers, conjugated diene monomers, and aromatic divinyl monomers are preferable as cross-linkable monomers that can form a cross-linkable monomer unit. In particular, divinylbenzene and ethylene glycol dimethacrylate are more preferable, and ethylene glycol dimethacrylate is even more preferable.

Examples of aromatic monovinyl monomers that can form an aromatic monovinyl monomer unit include, but are not specifically limited to, styrene, α-methylstyrene, styrene sulfonic acid, butoxystyrene, and vinylnaphthalene, of which, styrene is preferable. Note that one of these aromatic monovinyl monomers may be used individually, or two or more of these aromatic monovinyl monomers may be used in combination in a freely selected ratio.

Examples of mono(meth)acrylic acid ester monomers that can form a mono(meth)acrylic acid ester monomer unit include acrylic acid chain alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid chain alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate.

In particular, n-butyl acrylate and 2-ethylhexyl acrylate are preferable. Note that one of these (meth)acrylic acid ester monomers may be used individually, or two or more of these (meth)acrylic acid ester monomers may be used in combination in a freely selected ratio.

The proportional content of other monomer units in the particulate polymer when the amount of all monomer units in the particulate polymer is taken to be 100 mass% is preferably 1 mass% or more, and more preferably 5 mass% or more, and is preferably 30 mass% or less, more preferably 20 mass% or less, and even more preferably 18 mass% or less.

When the particulate polymer includes other monomer units in a proportion that is not less than any of the lower limits set forth above, metal deposition on an electrode during charging and discharging can be further inhibited, and wet adhesiveness of an obtained functional layer can also be further improved. When the particulate polymer includes other monomer units in a proportion that is not more than any of the upper limits set forth above, metal deposition on an electrode during charging and discharging can be further inhibited, and wet adhesiveness of an obtained functional layer can also be further improved.

### [Production of particulate polymer]

The particulate polymer can be produced through polymerization of a monomer composition that contains the monomers described above, carried out in an aqueous solvent such as water, for example. The proportion constituted by each monomer in the monomer composition is normally the same as the proportion constituted by each monomer unit in the particulate polymer.

The method of polymerization is not specifically limited and may be a suspension polymerization method, an emulsion polymerization and aggregation method, a pulverization method, or the like, for example. In particular, a suspension polymerization method and an emulsion polymerization and aggregation method are preferable, and a suspension polymerization method is more preferable. Moreover, the polymerization reaction can be a reaction such as radical polymerization or living radical polymerization.

The following describes a method of producing the particulate polymer by suspension polymerization as one example.

### -Production of particulate polymer by suspension polymerization-(1) Production of monomer composition

First, monomers for forming the target particulate polymer and other compounding agents that are added as necessary are mixed so as to produce a monomer composition.

### (2) Formation of droplets

Next, the monomer composition is dispersed in water, a polymerization initiator is added, and then droplets of the monomer composition are formed. No specific limitations are placed on the method by which the droplets are formed. For example, the droplets can be formed by using a disperser such as an emulsifying/dispersing device to perform shear stirring of the water containing the monomer composition.

The polymerization initiator that is used may be di(3,5,5-trimethylhexanoyl) peroxide, t-butyl peroxy-2-ethylhexanoate, azobisisobutyronitrile, or any other such polymerization initiator, for example. Note that the polymerization initiator may be added before droplet formation once the monomer composition has been dispersed in water or may be added to the monomer composition before dispersion thereof in water.

From a viewpoint of stabilizing droplets of the monomer composition that are formed in the water, it is preferable that a dispersion stabilizer is added to the water and that droplets of the monomer composition are then formed. The dispersion stabilizer may be sodium dodecylbenzenesulfonate, a metal hydroxide such as magnesium hydroxide, or the like, for example. The dispersion stabilizer may be added in the form of a colloidal dispersion liquid having the dispersion stabilizer dispersed in water, for example.

### (3) Polymerization

Once droplets of the monomer composition have been formed, the water containing the formed droplets is heated to initiate polymerization and thereby form a particulate polymer in the water. The reaction temperature in the polymerization is preferably not lower than 50°C and not higher than 95°C. Moreover, the reaction time in the polymerization is preferably not less than 1 hour and not more than 10 hours, and is more preferably 8 hours or less, and even more preferably 7 hours or less.

### (4) Washing, filtration, dehydration, and drying step

Once the polymerization has ended, the particulate polymer can be obtained by subjecting the water containing the particulate polymer to washing, filtration, and drying by standard methods.

### <Binder>

The presently disclosed composition for a functional layer can optionally further contain a binder. The further inclusion of a binder in the composition for a functional layer can improve wet adhesiveness.

### [Chemical composition]

Any known polymer that is used as a binder can be used as the binder without any specific limitations so long as it is a polymer that does not correspond to the particulate polymer described above. For example, the binder may be a conjugated diene polymer, an acrylic polymer, polyvinylidene fluoride (PVDF), polyvinyl alcohol (PVOH), or the like. One binder may be used individually, or two or more binders may be used in combination. The binder is preferably a polymer such as a conjugated diene polymer, an acrylic polymer, or polyvinylidene fluoride (PVDF) that is water-insoluble and that can be dispersed in a dispersion medium such as water, is more preferably a conjugated diene polymer or an acrylic polymer, and is even more preferably an acrylic polymer. Note that in a case in which the functional layer is to be adopted at the surface of a positive electrode in an electrochemical device, the binder is preferably a polymer other than a conjugated diene polymer. Also note that when a polymer is said to be "water-insoluble" in the present disclosure, this means that when 0.5 g of the polymer is dissolved in 100 g of water at a temperature of 25°C, insoluble content is 90 mass% or more.

The term "conjugated diene polymer" as used here refers to a polymer that includes a conjugated diene monomer unit. Specific examples of the conjugated diene polymer include, but are not specifically limited to, a copolymer including an aromatic vinyl monomer unit and an aliphatic conjugated diene monomer unit such as a styrene-butadiene copolymer (SBR); butadiene rubber (BR); acrylic rubber (NBR) (copolymer including an acrylonitrile unit and a butadiene unit); and hydrogenated products thereof. Moreover, examples of the conjugated diene monomer unit included in the conjugated diene polymer are the same as previously described in relation to the conjugated diene monomer unit that can be included in the particulate polymer.

Moreover, the term "acrylic polymer" refers to a polymer that includes a (meth)acrylic acid ester monomer unit. Note that one of these binders may be used individually, or two or more of these binders may be used in combination in a freely selected ratio.

An acrylic polymer that can preferably be used as the binder may include a monomer unit other than a (meth)acrylic acid ester monomer unit in any proportion without any specific limitations.

### [Glass-transition temperature]

The glass-transition temperature of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, wet adhesiveness can be further improved. On the other hand, when the glass-transition temperature of the binder is not higher than any of the upper limits set forth above, flexibility of a functional layer can be further increased.

### [Content of binder]

The content of the binder in the composition for a functional layer is preferably 10 parts by mass or more per 100 parts by mass of the particulate polymer, and is preferably 80 parts by mass or less, and more preferably 70 parts by mass or less per 100 parts by mass of the particulate polymer. When the content of the binder is not less than the lower limit set forth above, wet adhesiveness can be further improved. On the other hand, when the content of the binder is not more than any of the upper limits set forth above, reduction of ion conductivity of a functional layer can be inhibited, and cycle characteristics of an obtained electrochemical device can be improved.

In a case in which the composition for a functional layer contains subsequently described heat-resistant particles, the content of the binder in the composition for a functional layer is preferably 0.1 parts by mass or more, more preferably 0.2 parts by mass or more, and even more preferably 0.5 parts by mass or more per 100 parts by mass of the heat-resistant particles, and is preferably 20 parts by mass or less per 100 parts by mass of the heat-resistant particles. When the content of the binder is not less than any of the lower limits set forth above, wet adhesiveness can be further improved. On the other hand, when the content of the binder is not more than the upper limit set forth above, reduction of ion conductivity of a functional layer can be inhibited, and cycle characteristics of an obtained electrochemical device can be improved.

Note that the binder can be produced through polymerization of a monomer composition that contains the monomers described above, carried out in an aqueous solvent such as water, for example, but is not specifically limited to being produced in this manner. The proportion constituted by each monomer in the monomer composition is normally the same as the proportion constituted by each monomer unit in the binder.

The method of polymerization of the binder is not specifically limited and may be a suspension polymerization method, an emulsion polymerization and aggregation method, a pulverization method, or the like, for example. Moreover, the polymerization reaction can be a reaction such as radical polymerization or living radical polymerization.

Although the binder may have a particulate form or may have a non-particulate form, it is preferable that the binder has a particulate form from a viewpoint of good inhibition of shedding of components that are contained in a functional layer.

### <Heat-resistant particles>

The presently disclosed composition for a functional layer preferably further contains heat-resistant particles. The further inclusion of heat-resistant particles in the composition for a functional layer can improve heat resistance of a functional layer.

The heat-resistant particles are not specifically limited and may be particles formed of an inorganic material (i.e., inorganic particles) or particles formed of an organic material (i.e., organic particles) that are electrochemically stable and that are stably present in the environment of use of an electrochemical device. Note that inorganic particles or organic particles may be used by themselves as the heat-resistant particles, or inorganic particles and organic particles may be used in combination as the heat-resistant particles.

### [Inorganic particles]

The inorganic particles may be particles of an inorganic oxide such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or particles of clay such as talc or montmorillonite. These particles may be subjected to element substitution, surface treatment, solid solution treatment, or the like as necessary. Note that one type of inorganic particles may be used individually, or two or more types of inorganic particles may be used in combination.

### [Organic particles]

The organic particles are particles formed of a polymer that differs from the specific particulate polymer and the binder described above and that does not display adhesiveness. Examples of the organic particles include particles of various cross-linked polymers such as cross-linked polymethyl methacrylate, cross-linked polystyrene, cross-linked polydivinylbenzene, cross-linked styrene-divinylbenzene copolymer, polystyrene, polyimide, polyamide, polyamide imide, melamine resin, phenolic resin, and benzoguanamine-formaldehyde condensate, particles of heat-resistant polymers such as polysulfone, polyacrylonitrile, polyaramids, polyacetal, and thermoplastic polyimide, modified products and derivatives of any of the preceding examples, and heat-resistant organic particles disclosed in WO2019/065416A1. Note that one type of organic particles may be used individually, or two or more types of organic particles may be used in combination. Also note that the organic particles are formed of a polymer that is not adhesive as previously described. Specifically, the polymer forming the organic particles preferably has a glass-transition temperature of 150°C or higher.

Of the heat-resistant particles described above, inorganic particles and organic particles formed of a polymer having a glass-transition temperature of 150°C or higher are preferable from a viewpoint of further improving heat resistance, inorganic particles are more preferable, and particles formed of alumina (alumina particles), particles formed of boehmite (boehmite particles), particles formed of barium sulfate (barium sulfate particles), and particles formed of magnesium hydroxide (magnesium hydroxide particles) are even more preferable.

### [Properties of heat-resistant particles]

The volume-average particle diameter of the heat-resistant particles is preferably 0.1 µm or more, more preferably 0.2 µm or more, and even more preferably 0.3 µm or more, and is preferably 5.0 µm or less, more preferably 1.0 µm or less, and even more preferably 0.8 µm or less. When the volume-average particle diameter of the heat-resistant particles is 0.1 µm or more, reduction of ion conductivity of a functional layer caused by excessively dense packing of the heat-resistant particles in the functional layer can be inhibited, and cycle characteristics of an obtained electrochemical device can be improved. On the other hand, when the volume-average particle diameter of the heat-resistant particles is 1.0 µm or less, an electrochemical device member that includes a functional layer can be caused to sufficiently display excellent heat resistance even when the thickness of the functional layer is reduced. Consequently, heat resistance of the electrochemical device member can be sufficiently ensured while also increasing the capacity of an electrochemical device.

### [Mixing ratio of heat-resistant particles and particulate polymer]

A mixing ratio of the heat-resistant particles and the particulate polymer in the composition for a functional layer is preferably 91.5:8.5 to 54.5:45.5 as a mass ratio (heat-resistant particles:particulate polymer). When the mixing ratio of the heat-resistant particles and the particulate polymer as a mass ratio is within the range set forth above, this results in a better balance of heat resistance and adhesiveness of a functional layer.

### <Other components>

The composition for a functional layer may contain any other components besides the components described above. No specific limitations are placed on other components so long as they do not affect electrochemical reactions in an electrochemical device. For example, known additives such as dispersants, wetting agents, thickeners, suspension protectants, emulsifiers, defoamers, preservatives, and pH modifiers may be used as other components. One of these other components may be used individually, or two or more of these other components may be used in combination.

### <Production method of composition for electrochemical device functional layer>

No specific limitations are placed on the method by which the composition for a functional layer is produced. For example, the composition for a functional layer can be produced by mixing the above-described particulate polymer, binder, heat-resistant particles, water as a dispersion medium, and other components. Note that in a case in which the particulate polymer or the binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in the water dispersion may be used as the dispersion medium.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

### (Functional layer for electrochemical device and laminate for electrochemical device)

The presently disclosed functional layer for an electrochemical device is a layer that is formed using the composition for a functional layer set forth above. For example, the presently disclosed functional layer for an electrochemical device can be formed by applying the composition for a functional layer set forth above onto the surface (at one side or both sides) of a suitable substrate to form a coating film, and subsequently drying the coating film that is formed. In other words, the functional layer for an electrochemical device is formed of a dried product of the composition for a functional layer set forth above, contains at least the previously described particulate polymer, and optionally further contains one or more selected from the group consisting of a binder, heat-resistant particles, and other components.

Note that components contained in the functional layer are components that were contained in the composition for a functional layer and that the preferred ratio of each component is the same as the preferred ratio of each component in the composition for a functional layer. Moreover, the functional layer for an electrochemical device has excellent wet adhesiveness and is also capable of good inhibition of metal deposition on an electrode during charging and discharging as a result of being formed using the composition for a functional layer set forth above.

Furthermore, a laminate that is obtained by forming the functional layer for an electrochemical device at one side or both sides of a substrate can be used as the presently disclosed laminate for an electrochemical device, and this laminate has excellent wet adhesiveness and is also capable of good inhibition of metal deposition on an electrode during charging and discharging.

### <Heat-resistant particle layer>

In a case in which the composition for a functional layer contains heat-resistant particles, the functional layer for an electrochemical device can have a structure in which the particulate polymer is partially embedded in a heat-resistant particle layer containing the heat-resistant particles (i.e., a structure in which the particulate polymer partially protrudes from a heat-resistant particle layer), but is not specifically limited to this structure.

### [Thickness of heat-resistant particle layer]

The thickness of the heat-resistant particle layer is preferably 0.5 µm or more, more preferably 0.8 µm or more, and even more preferably 1 µm or more, and is preferably 6 µm or less, more preferably 5 µm or less, and even more preferably 3.5 µm or less. When the thickness of the heat-resistant particle layer is not less than any of the lower limits set forth above, this results in an electrochemical device having extremely good heat resistance. On the other hand, when the thickness of the heat-resistant particle layer is not more than any of the upper limits set forth above, ion diffusivity of the functional layer can be ensured, and cycle characteristics of an obtained electrochemical device can be further enhanced.

### [Ratio of number-average particle diameter of particulate polymer relative to thickness of heat-resistant particle layer]

A ratio of the number-average particle diameter of the particulate polymer relative to the thickness of the heat-resistant particle layer (number-average particle diameter of particulate polymer/thickness of heat-resistant particle layer) is preferably 1.0 or more, and more preferably 1.75 or more, and is preferably 5.0 or less, more preferably 4.5 or less, and even more preferably 4.25 or less.

When the ratio of the number-average particle diameter of the particulate polymer relative to the thickness of the heat-resistant particle layer is not less than any of the lower limits set forth above, even better wet adhesiveness can be displayed because it is even easier for the particulate polymer to protrude relative to the surface of the heat-resistant particles at a thickness direction surface of the functional layer. On the other hand, when the ratio of the number-average particle diameter of the particulate polymer relative to the thickness of the heat-resistant particle layer is not more than any of the upper limits set forth above, good wet adhesiveness can be displayed because there is a larger number of adhesive points of the particulate polymer, and metal deposition on an electrode during charging and discharging can also be further inhibited because optimal space is obtained between a separator and an electrode that are stacked with the functional layer in-between and concentration of metal ions such as lithium ions is inhibited.

### <Substrate>

No limitations are placed on the substrate onto which the composition for a functional layer is applied. For example, a coating film of the composition for a functional layer may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of a member of an electrochemical device. However, it is preferable that a separator substrate or an electrode substrate is used as the substrate from a viewpoint of raising electrochemical device member production efficiency since a step of peeling the functional layer can be omitted. A laminate obtained by forming the functional layer at one side or both sides of a separator substrate can be used well as a separator including the functional layer, whereas a laminate obtained by forming the functional layer at one side or both sides of an electrode substrate can be used well as an electrode including the functional layer.

### [Separator substrate]

The separator substrate on which the functional layer is formed is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of the separator, which increases the ratio of electrode active material in an electrochemical device, and thereby increases the volumetric capacity of the electrochemical device. Note that the separator substrate may include any layer other than the functional layer that can display an expected function in part thereof.

### [Electrode substrate]

The electrode substrate (positive electrode substrate or negative electrode substrate) on which the functional layer is formed is not specifically limited and may be an electrode substrate that is obtained by forming an electrode mixed material layer on a current collector. The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example. Note that the electrode substrate may include any layer other than the functional layer that has an expected function in part thereof.

### <Production method of functional layer and laminate>

No specific limitations are placed on the method by which the presently disclosed functional layer and laminate are produced. For example, a method in which a functional layer is formed on a releasable sheet and then this functional layer is transferred onto a substrate can be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

### [Supply step]

In the supply step, the presently disclosed composition for a functional layer set forth above is supplied onto the substrate to form a coating film of the composition for a functional layer on the substrate. No specific limitations are placed on the method by which the composition for a functional layer is supplied onto the substrate, and the composition for a functional layer may be applied onto the surface of the substrate, or the substrate may be immersed in the composition for a functional layer. Moreover, it is preferable that the composition for a functional layer is applied onto the surface of the substrate because this makes it easy to control of the thickness of the produced functional layer. Examples of methods by which the composition for a functional layer can be applied onto the substrate include, but are not specifically limited to, doctor blading, reverse roll coating, direct roll coating, gravure coating, bar coating, extrusion coating, and brush coating. Note that in the supply step, a coating film of the composition for a functional layer may be formed at just one side of the substrate, or coating films of the composition for a functional layer may be formed at both sides of the substrate.

### [Drying step]

In the drying step, the coating film of the composition for a functional layer that has been formed on the substrate in the supply step is dried so as to remove the dispersion medium and form a functional layer. The coating film of the composition for a functional layer can be dried by any commonly known method without any specific limitations. Examples of drying methods that can be used include drying by warm, hot, or low-humidity air; drying in a vacuum; and drying by irradiation with infrared light, electron beams, or the like. Although no specific limitations are placed on the drying conditions, the drying temperature is preferably 40°C to 150°C and the drying time is preferably 1 minute to 30 minutes.

Note that production of the presently disclosed laminate may involve performing the supply step and the drying step with respect to one side of the substrate to form a functional layer, and subsequently further performing the supply step and the drying step with respect to the other side of the substrate to form a functional layer.

### [Thickness of functional layer]

The thickness of the functional layer formed on the substrate (hereinafter, also referred to as the "maximum thickness of the functional layer") is preferably 1.0 µm or more, more preferably 1.5 µm or more, even more preferably 2.0 µm or more, particularly preferably 2.5 µm or more, and most preferably 5.0 µm or more, and is preferably 10.0 µm or less, more preferably 9.0 µm or less, and even more preferably 8.0 µm or less.

When the maximum thickness of the functional layer is not less than any of the lower limits set forth above, this results in an electrochemical device having extremely good heat resistance. On the other hand, when the maximum thickness of the functional layer is not more than any of the upper limits set forth above, ion diffusivity of the functional layer can be ensured, and cycle characteristics of an obtained electrochemical device can be further enhanced.

Note that the "maximum thickness of a functional layer" referred to in the present specification can be measured using a field emission scanning electron microscope (FE-SEM), for example.

### (Electrochemical device)

The presently disclosed electrochemical device includes an electrode and a separator, and a feature thereof is that the presently disclosed laminate set forth above is included as at least one of the electrode and the separator, and preferably as the separator. The presently disclosed electrochemical device can display excellent cycle characteristics as a result of the presently disclosed laminate set forth above being used as at least one electrochemical device member among the electrode and the separator. Note that in the electrochemical device in which the laminate is used, the particulate polymer that was contained in the functional layer of the laminate may maintain a particulate form or may have any other form.

The presently disclosed electrochemical device may be, but is not specifically limited to, a lithium ion secondary battery, an electric double-layer capacitor, or a lithium ion capacitor, for example, and is preferably a lithium ion secondary battery.

Note that although the following gives a lithium ion secondary battery as one example of the presently disclosed electrochemical device and describes a case in which the presently disclosed laminate set forth above is used as a separator of the lithium ion secondary battery, the presently disclosed electrochemical device is not limited thereto.

### <Positive electrode and negative electrode>

Electrodes that are formed of known electrode substrates (positive electrode substrate and negative electrode substrate) such as previously described in the "Substrate" section can be used as a positive electrode and a negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used. The concentration of the electrolyte in the electrolyte solution can be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant stack as necessary to place the stack in a battery container, injecting the electrolyte solution into the battery container, and sealing the battery container. Note that at least one member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer. Various measurements and evaluations in the examples and comparative examples were performed as follows.

### <Glass-transition temperature>

With respect to particulate polymers in a dry state that were produced in all of the examples and in Comparative Examples 1 and 2, deionized water was added to the particulate polymer so as to produce a water dispersion containing 20 mass% of the particulate polymer, and this water dispersion was taken to be a pre-drying water dispersion. Moreover, a water dispersion containing a particulate polymer that was produced in Comparative Example 3 was also taken to be a pre-drying water dispersion. Each pre-drying water dispersion was added dropwise into a Teflon^{®} (Teflon is a registered trademark in Japan, other countries, or both) petri dish and was dried in a hot-air drying oven set to 25°C for 24 hours to obtain a measurement sample. Next, 10 mg of the measurement sample was weighed into an aluminum pan and was measured by a differential scanning calorimeter (EXSTAR DSC6220 produced by SII NanoTechnology Inc.) under conditions prescribed in JIS Z8703 with a measurement temperature range of -100°C to 500°C and a heating rate of 10°C/min and with an empty aluminum pan as a reference to obtain a differential scanning calorimetry (DSC) curve. In this heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C). Results for the glass-transition temperature of particulate polymers are shown in Table 1.

### <Degree of swelling in electrolyte solution>

A water dispersion containing a particulate polymer produced in each example or comparative example was loaded into a petri dish made of polytetrafluoroethylene and was dried under conditions of 48 hours at 25°C to prepare a powder. Approximately 0.2 g of the obtained powder was pressed at 200°C and 5 MPa for 2 minutes to obtain a test specimen. The obtained test specimen was cut to 1 cm-square, and the mass WO of the cut test specimen was measured.

The test specimen described above was then immersed in electrolyte solution at 60°C for 72 hours. Thereafter, the test specimen was withdrawn from the electrolyte solution, electrolyte solution on the surface of the test specimen was wiped off, and the mass W1 of the test specimen after the immersion test was measured.

The measured masses WO and W1 were used to calculate the degree of swelling in electrolyte solution S (%) by S = W1/WO × 100. Results for the degree of swelling in electrolyte solution of particulate polymers are shown in Table 1.

Note that a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume mixing ratio: EC/DEC/VC = 68.5/30/1.5) was used as the electrolyte solution.

### <Volume-average particle diameter of particulate polymer>

Particulate polymers in a dry state that were produced in all of the examples and Comparative Examples 1 and 2 and a particulate polymer in a dry state that was obtained by performing subsequently described operations (A) with respect to a water dispersion containing a particulate polymer that was produced in Comparative Example 3 were each taken as a measurement sample. The measurement sample was weighed out in an amount equivalent to 0.1 g, was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by an ultrasonic disperser 20 W (Watt). Thereafter, a particle size analyzer (Multisizer produced by Beckman Coulter, Inc.) was used to measure the D50 by volume (volume-average particle diameter) of the measurement sample under conditions of an aperture diameter of 20 µm, a medium of ISOTON II, and a measured particle count of 100,000. The results are shown in Table 1.

### <Volume-average particle diameter of binder>

The volume-average particle diameter of a binder produced in each example was measured by laser diffraction. Specifically, a produced water dispersion containing the binder (adjusted to a solid content concentration of 0.1 mass%) was used as a sample. In a particle size distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <Measurement of amount of coarse particles>

The mass (A0) of a mesh (#200) made of Teflon^{®} was measured, and the mesh was set in a funnel. Next, 1,000 g of a water dispersion containing a particulate polymer produced in each example or comparative example was poured into the funnel and was filtered. The Teflon^{®} mesh that had been used in the filtration was dried in a 105°C hot-air drying oven for 1 hour. The Teflon^{®} mesh was then left to cool, and the mass (A1) thereof was subsequently measured. The amount of coarse particles in the water dispersion containing a particulate polymer produced in each example or comparative example was calculated by the following formula. Amount of coarse particles (mass%) = {(A1) - (A0)} ÷ {A2 × A3 ÷ 100} × 100
A0: Mass of mesh (g)
A1: Mass of mesh + dried matter (g)
A2: Mass of filtered dispersion liquid (g)
A3: Solid content concentration of filtered dispersion liquid (%)

The amount of coarse particles described above was then evaluated by the following standard. The results are shown in Table 1.

Note that a smaller amount of coarse particles indicates that destabilization of polymer particles during production of the particulate polymer and coarsening of some of these particles is inhibited.
A: Amount of coarse particles of less than 0.1 mass%
B: Amount of coarse particles of not less than 0.1 mass% and less than 1.0 mass%
C: Amount of coarse particles of 1.0 mass% or more

### <Thickness of heat-resistant particle layer>

First, a cross-section polisher was used to section a functional layer-equipped separator (laminate) in a stacking direction. Next, a field emission scanning electron microscope (FE-SEM) was used to observe the obtained laminate cross-section from a direction perpendicular thereto, and the thickness of a heat-resistant particle layer was calculated from an obtained image. Note that the thickness of the heat-resistant particle layer was taken to be the distance in a perpendicular direction from the surface of the separator at a side where the heat-resistant particle layer was formed to heat-resistant particles forming the surface of the heat-resistant particle layer.

### <Adhesiveness after immersion in electrolyte solution (wet adhesiveness)>

A functional layer-equipped separator produced in each example or comparative example was cut out as a strip of 10 mm × 50 mm. The separator was arranged along a surface at the negative electrode mixed material layer-side of a negative electrode produced in each example or comparative example with a functional layer in-between so as to produce a laminate for evaluation including the functional layer-equipped separator and the negative electrode.

The obtained laminate for evaluation was cut out as a 20 mm × 80 mm strip, and was placed in laminate packaging. After injecting approximately 300 µL of electrolyte solution into the laminate packaging and sealing the laminate packaging, the laminate for evaluation was left in an immersed state at a temperature of 25°C for 12 hours. Note that a solution obtained by dissolving LiPF₆ as a supporting electrolyte with a concentration of 1 mol/L in a mixed solvent of ethylene carbonate (EC), diethyl carbonate (DEC), and vinylene carbonate (VC) (EC/DEC/VC (volume mixing ratio at 25°C) = 68.5/30/1.5) was used as the electrolyte solution in this immersion.

Thereafter, the laminate for evaluation was hot pressed for 20 minutes from above the packaging using a flat-plate press with a temperature of 80°C and a load of 0.5 kN to obtain a test specimen in which the functional layer-equipped separator and the negative electrode were adhered.

The obtained test specimen was taken out, and electrolyte solution attached to the surface thereof was wiped off. Thereafter, this test specimen was placed with the surface at the negative electrode-side facing downward, and cellophane tape (tape prescribed by JIS Z1522) was affixed to the surface at the negative electrode-side. Note that the cellophane tape was fixed to a horizontal test stage in advance. Thereafter, the stress when the separator was peeled off by pulling one end of the separator vertically upward at a pulling speed of 50 mm/min was measured. Three measurements were made in this manner, an average value of the stress was calculated, and the average value was taken to be the peel strength. Adhesiveness of the separator to the negative electrode after immersion in electrolyte solution was evaluated by the following standard based on the determined peel strength. The results are shown in Table 1.

Note that a larger value for the peel strength indicates better adhesiveness of the separator to the negative electrode after immersion in electrolyte solution.
A: Peel strength of 5.0 N/m or more
B: Peel strength of not less than 3.0 N/m and less than 5.0 N/m
C: Peel strength of less than 3.0 N/m

### <Metal deposition rate>

The metal deposition rate on an electrode during charging and discharging of an electrochemical device such as a secondary battery was measured by the following method as the lithium deposition area fraction on a negative electrode. Specifically, a lithium ion secondary battery produced in each example or comparative example was subjected to 10 cycles of a charge/discharge operation with a cell voltage of 4.35 V to 3.00 V and a charge/discharge rate of 1.5C in an environment having a temperature of 10°C, and was finally charged to a state of charge (SOC) of 100%.

The fully charged secondary battery was then disassembled to take out a negative electrode, and the area fraction of lithium deposited on the surface of a negative electrode mixed material layer was calculated by the following formula. Lithium deposition area fraction (%) = (Area of deposited lithium/Area of surface of negative electrode mixed material layer) × 100

The lithium deposition area fraction was evaluated by the following standard. The results are shown in Table 1.

Note that a lower lithium deposition area fraction indicates better inhibition of metal deposition on an electrode during charging and discharging.
A: Lithium deposition area fraction of less than 2%
B: Lithium deposition area fraction of not less than 2% and less than 5%
C: Lithium deposition area fraction of 5% or more

### <Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 100^{th} cycle was defined as X2.

The discharge capacity X1 and the discharge capacity X2 were used to calculate a capacity maintenance rate ΔC' (ΔC' = (X2/X1) × 100(%)), which was then evaluated by the following standard. The results are shown in Table 1.

Note that a larger value for the capacity maintenance rate ΔC' indicates that the secondary battery has better cycle characteristics. Also note that the reason for a secondary battery having excellent cycle characteristics during 100 cycles is presumed to be that a functional layer included in the secondary battery can display good retention of electrolyte solution.
A: Capacity maintenance rate ΔC' of 93% or more
B: Capacity maintenance rate ΔC' of not less than 90% and less than 93%
C: Capacity maintenance rate ΔC' of less than 90%

### (Example 1)

### <Production of particulate polymer (A)>

### [Production of monomer composition (A)]

A monomer composition (A) was produced by mixing 70 parts of cyclohexyl methacrylate as a cycloalkyl group-containing monomer, 22 parts of glycidyl methacrylate as a glycidyl group-containing monomer, 3 parts of styrene as an aromatic monovinyl monomer, 4.7 parts of 2-ethylhexyl acrylate as a mono(meth)acrylic acid ester monomer, and 0.3 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution (A2) of 7.0 parts of sodium hydroxide dissolved in 50 parts of deionized water to an aqueous solution (A1) of 10.0 parts of magnesium chloride dissolved in 200 parts of deionized water under stirring.

### [Suspension polymerization]

A particulate polymer (A) was produced by suspension polymerization. Specifically, the monomer composition (A) obtained as described above was added to the colloidal dispersion liquid (A) containing magnesium hydroxide, was further stirred therewith, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition (A) in the colloidal dispersion liquid containing magnesium hydroxide.

The magnesium hydroxide-containing colloidal dispersion liquid in which droplets of the monomer composition (A) had been formed was loaded into a reactor, the temperature was raised to 90°C, and a polymerization reaction was performed for 5 hours to yield a water dispersion containing a particulate polymer (A).

The obtained water dispersion containing the particulate polymer (A) was subjected to the following operations (A) to obtain the particulate polymer (A) in a dry state. First, the water dispersion containing the particulate polymer (A) was stirred while sulfuric acid was added dropwise at room temperature (25°C) so as to perform acid washing until the pH reached 5.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 25°C for 48 hours to obtain the particulate polymer (A) in a dry state.

### <Production of water dispersion containing binder (α)>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a mono(meth)acrylic acid ester monomer, 2 parts of methacrylic acid, 2 parts of acrylonitrile, 1 part of allyl methacrylate as a cross-linkable monomer, and 1 part of allyl glycidyl ether as a glycidyl group-containing monomer.

The obtained monomer composition (α) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α). The obtained particulate binder (α) had a volume-average particle diameter of 0.25 µm and a glass-transition temperature of -40°C.

### <Production of slurry composition (composition for functional layer)>

A pre-mixing slurry was obtained by adding 0.5 parts of sodium polyacrylate as a dispersant to 70 parts of alumina (AKP3000 produced by Sumitomo Chemical Co., Ltd.; volume-average particle diameter: 0.7 µm) as heat-resistant particles, further adding deionized water so as to adjust the solid content concentration to 55%, and mixing these materials using a ball mill.

In addition, 25 parts of the particulate polymer (A), 5.0 parts of the binder (α), 1.5 parts of carboxymethyl cellulose as a thickener, and 0.2 parts of sodium dodecylbenzenesulfonate (NEOPELEX G-15 produced by Kao Corporation) as an emulsifier relative to 70 parts of alumina contained in the pre-mixing slurry were mixed, and then the resultant mixture was added to the pre-mixing slurry obtained as described above. Deionized water was further added so as to adjust the solid content concentration to 40% and yield a slurry composition (composition for a functional layer).

The mixing ratio of the heat-resistant particles and the particulate polymer (A) in the slurry composition during the above was 73.7:26.3 as a mass ratio (heat-resistant particles:particulate polymer (A)).

### <Production of functional layer-equipped separator (laminate)>

A microporous membrane made of polyethylene (thickness: 12 µm) was prepared as a separator substrate. The slurry composition obtained as described above was applied onto one side of the separator substrate by bar coating. Next, the separator substrate with the slurry composition applied thereon was dried at 50°C for 10 minutes to form a functional layer. The same operations were performed with respect to the other side of the separator substrate to produce a functional layer-equipped separator (laminate) that included functional layers each having a heat-resistant fine particle layer thickness of 2.0 µm at both sides of the separator substrate.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing the target binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2), and mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on the positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side thereof was facing toward the functional layer-equipped separator and such that the negative electrode was positioned at the other longitudinal direction side of the functional layer-equipped separator. The resultant product was wound up using a roll to obtain a roll. This roll was pressed at 50°C and 1 MPa to obtain a flattened roll, was subsequently enclosed in an aluminum packing case serving as a battery case, and then electrolyte solution (solvent: ethylene carbonate/diethyl carbonate/vinylene carbonate (volume ratio) = 68.5/30/1.5; electrolyte: LiPF₆ of 1 M in concentration) was injected such that no air remained. An opening of the aluminum packing case was closed by heat sealing at a temperature of 150°C to produce a wound lithium ion secondary battery having a capacity of 800 mAh.

### (Example 2)

Various operations, measurements, and evaluations were performed in the same way as in Example 1 with the exception that a particulate polymer (B) produced as described below was used instead of the particulate polymer (A) in production of the slurry composition. The results are shown in Table 1.

### <Production of particulate polymer (B)>

The particulate polymer (B) was produced by performing operations in the same way as in Example 1 with the exception that in production of the particulate polymer, cyclohexyl methacrylate as a cycloalkyl group-containing monomer was changed from 70 parts to 91 parts, glycidyl methacrylate as a glycidyl group-containing monomer was changed from 22 parts to 5 parts, styrene as an aromatic monovinyl monomer was changed from 3 parts to 1 part, and 2-ethylhexyl acrylate as a mono(meth)acrylic acid ester monomer was changed from 4.7 parts to 2.7 parts.

### (Example 3)

Various operations, measurements, and evaluations were performed in the same way as in Example 1 with the exception that a particulate polymer (C) produced as described below was used instead of the particulate polymer (A) in production of the slurry composition. The results are shown in Table 1.

### <Production of particulate polymer (C)>

The particulate polymer (C) was produced by performing operations in the same way as in Example 1 with the exception that in production of the particulate polymer, cyclohexyl methacrylate as a cycloalkyl group-containing monomer was changed from 70 parts to 96 parts, glycidyl methacrylate as a glycidyl group-containing monomer was changed from 22 parts to 3 parts, 2-ethylhexyl acrylate as a mono(meth)acrylic acid ester monomer was changed from 4.7 parts to 0.7 parts, and styrene was not used.

### (Example 4)

Various operations, measurements, and evaluations were performed in the same way as in Example 1 with the exception that a particulate polymer (D) produced as described below was used instead of the particulate polymer (A) in production of the slurry composition. The results are shown in Table 1.

### <Production of particulate polymer (D)>

The particulate polymer (D) was produced by performing operations in the same way as in Example 1 with the exception that in production of the particulate polymer, cyclohexyl methacrylate as a cycloalkyl group-containing monomer was changed from 70 parts to 61 parts, glycidyl methacrylate as a glycidyl group-containing monomer was changed from 22 parts to 34 parts, styrene as an aromatic monovinyl monomer was changed from 3 parts to 2.7 parts, and 2-ethylhexyl acrylate as a mono(meth)acrylic acid ester monomer was changed from 4.7 parts to 2 parts.

### (Example 5)

Various operations, measurements, and evaluations were performed in the same way as in Example 1 with the exception that a particulate polymer (E) produced as described below was used instead of the particulate polymer (A) in production of the slurry composition. The results are shown in Table 1.

### <Production of particulate polymer (E)>

The particulate polymer (E) was produced by performing operations in the same way as in Example 1 with the exception that in production of the particulate polymer, cyclohexyl methacrylate as a cycloalkyl group-containing monomer was changed from 70 parts to 51 parts, glycidyl methacrylate as a glycidyl group-containing monomer was changed from 22 parts to 35 parts, styrene as an aromatic monovinyl monomer was changed from 3 parts to 2 parts, 2-ethylhexyl acrylate as a mono(meth)acrylic acid ester monomer was changed from 4.7 parts to 1.7 parts, and 10 parts of n-butyl acrylate as a mono(meth)acrylic acid ester monomer was used.

### (Example 6)

Various operations, measurements, and evaluations were performed in the same way as in Example 1 with the exception that a particulate polymer (F) produced as described below was used instead of the particulate polymer (A) in production of the slurry composition. The results are shown in Table 1.

### <Production of particulate polymer (F)>

The particulate polymer (F) was produced by performing operations in the same way as in Example 1 with the exception that in production of the particulate polymer, cyclohexyl methacrylate as a cycloalkyl group-containing monomer was changed from 70 parts to 55 parts, glycidyl methacrylate as a glycidyl group-containing monomer was changed from 22 parts to 44 parts, 2-ethylhexyl acrylate as a mono(meth)acrylic acid ester monomer was changed from 4.7 parts to 0.7 parts, and styrene was not used.

### (Example 7)

Various operations, measurements, and evaluations were performed in the same way as in Example 1 with the exception that a particulate polymer (G) produced as described below was used instead of the particulate polymer (A) in production of the slurry composition. The results are shown in Table 1.

### <Production of particulate polymer (G)>

The particulate polymer (G) was produced by performing operations in the same way as in Example 1 with the exception that in production of the particulate polymer, cyclohexyl methacrylate as a cycloalkyl group-containing monomer was changed from 70 parts to 90 parts, glycidyl methacrylate as a glycidyl group-containing monomer was changed from 22 parts to 1 part, styrene as an aromatic monovinyl monomer was changed from 3 parts to 5 parts, and 2-ethylhexyl acrylate as a mono(meth)acrylic acid ester monomer was changed from 4.7 parts to 3.7 parts.

### (Example 8)

Various operations, measurements, and evaluations were performed in the same way as in Example 1 with the exception that a particulate polymer (H) produced as described below was used instead of the particulate polymer (A) in production of the slurry composition. The results are shown in Table 1.

### <Production of particulate polymer (H)>

The particulate polymer (H) was produced by performing operations in the same way as in Example 1 with the exception that in production of the particulate polymer, cyclohexyl methacrylate as a cycloalkyl group-containing monomer was changed from 70 parts to 80 parts, glycidyl methacrylate as a glycidyl group-containing monomer was changed from 22 parts to 10 parts, and styrene as an aromatic monovinyl monomer was changed from 3 parts to 5 parts.

### (Example 9)

Various operations, measurements, and evaluations were performed in the same way as in Example 1 with the exception that a particulate polymer (I) produced as described below was used instead of the particulate polymer (A) in production of the slurry composition. The results are shown in Table 1.

### <Production of particulate polymer (I)>

The particulate polymer (I) was produced by performing operations in the same way as in Example 1 with the exception that in production of the particulate polymer, cyclohexyl methacrylate as a cycloalkyl group-containing monomer was changed from 70 parts to 65 parts, glycidyl methacrylate as a glycidyl group-containing monomer was changed from 22 parts to 30 parts, styrene as an aromatic monovinyl monomer was changed from 3 parts to 2 parts, and 2-ethylhexyl acrylate as a mono(meth)acrylic acid ester monomer was changed from 4.7 parts to 2.7 parts.

### (Example 10)

Various operations, measurements, and evaluations were performed in the same way as in Example 1 with the exception that a particulate polymer (J) produced as described below was used instead of the particulate polymer (A) in production of the slurry composition. The results are shown in Table 1.

### <Production of particulate polymer (J)>

The particulate polymer (J) was produced by performing operations in the same way as in Example 1 with the exception that in production of the particulate polymer, 22 parts of vinyl acetate was used, and glycidyl methacrylate as a glycidyl group-containing monomer was not used.

### (Example 11)

Various operations, measurements, and evaluations were performed in the same way as in Example 1 with the exception that a particulate polymer (K) produced as described below was used instead of the particulate polymer (A) in production of the slurry composition. The results are shown in Table 1.

### <Production of particulate polymer (K)>

The particulate polymer (K) was produced by performing operations in the same way as in Example 1 with the exception that in production of the particulate polymer, 15 parts of acrylamide as an amide group-containing monomer was used, cyclohexyl methacrylate as a cycloalkyl group-containing monomer was changed from 70 parts to 77 parts, and glycidyl methacrylate as a glycidyl group-containing monomer was not used.

### (Example 12)

Various operations, measurements, and evaluations were performed in the same way as in Example 1 with the exception that a particulate polymer (L) produced as described below was used instead of the particulate polymer (A) in production of the slurry composition. The results are shown in Table 1.

### <Production of particulate polymer (L)>

The particulate polymer (L) was produced by performing operations in the same way as in Example 1 with the exception that in production of the particulate polymer, 20 parts of acrylamide as an amide group-containing monomer was used, cyclohexyl methacrylate as a cycloalkyl group-containing monomer was changed from 70 parts to 51 parts, styrene as an aromatic monovinyl monomer was changed from 3 parts to 28.7 parts, and glycidyl methacrylate as a glycidyl group-containing monomer and 2-ethylhexyl acrylate were not used.

### (Example 13)

Various operations, measurements, and evaluations were performed in the same way as in Example 1 with the exception that a particulate polymer (M) produced as described below was used instead of the particulate polymer (A) in production of the slurry composition. The results are shown in Table 1.

### <Production of particulate polymer (M)>

The particulate polymer (M) was produced by performing operations in the same way as in Example 1 with the exception that in production of the particulate polymer, 20 parts of acrylamide as an amide group-containing monomer was used, cyclohexyl methacrylate as a cycloalkyl group-containing monomer was changed from 70 parts to 52 parts, styrene as an aromatic monovinyl monomer was changed from 3 parts to 11 parts, 2-ethylhexyl acrylate as a mono(meth)acrylic acid ester monomer was changed from 4.7 parts to 16.7 parts, and glycidyl methacrylate as a glycidyl group-containing monomer was not used.

### (Example 14)

Various operations, measurements, and evaluations were performed in the same way as in Example 1 with the exception that a particulate polymer (N) produced as described below was used instead of the particulate polymer (A) in production of the slurry composition. The results are shown in Table 1.

### <Production of particulate polymer (N)>

The particulate polymer (N) was produced by performing operations in the same way as in Example 1 with the exception that in production of the particulate polymer, 19.7 parts of n-butyl acrylate as a mono(meth)acrylic acid ester monomer was used, cyclohexyl methacrylate as a cycloalkyl group-containing monomer was changed from 70 parts to 65 parts, glycidyl methacrylate as a glycidyl group-containing monomer was changed from 22 parts to 15 parts, and styrene and 2-ethylhexyl acrylate were not used.

### (Example 15)

Various operations, measurements, and evaluations were performed in the same way as in Example 1 with the exception that a particulate polymer (O) produced as described below was used instead of the particulate polymer (A) in production of the slurry composition. The results are shown in Table 1.

### <Production of particulate polymer (O)>

The particulate polymer (O) was produced by performing operations in the same way as in Example 1 with the exception that in production of the particulate polymer, 29.7 parts of n-butyl acrylate as a mono(meth)acrylic acid ester monomer was used, cyclohexyl methacrylate as a cycloalkyl group-containing monomer was changed from 70 parts to 60 parts, glycidyl methacrylate as a glycidyl group-containing monomer was changed from 22 parts to 10 parts, and styrene and 2-ethylhexyl acrylate were not used.

### (Example 16)

Various operations, measurements, and evaluations were performed in the same way as in Example 1 with the exception that a particulate polymer (P) produced as described below was used instead of the particulate polymer (A) in production of the slurry composition. The results are shown in Table 1.

### <Production of particulate polymer (P)>

The particulate polymer (P) was produced by performing operations in the same way as in Example 1 with the exception that in production of the particulate polymer, a colloidal dispersion liquid (P) containing magnesium hydroxide was used instead of the colloidal dispersion liquid (A) containing magnesium hydroxide as a metal hydroxide. Note that the colloidal dispersion liquid (P) containing magnesium hydroxide was produced by gradually adding an aqueous solution (P2) of 8.4 parts of sodium hydroxide dissolved in 50 parts of deionized water to an aqueous solution (P1) of 12.0 parts of magnesium chloride dissolved in 200 parts of deionized water under stirring.

### (Example 17)

Various operations, measurements, and evaluations were performed in the same way as in Example 1 with the exception that a particulate polymer (Q) produced as described below was used instead of the particulate polymer (A) in production of the slurry composition. The results are shown in Table 1.

### <Production of particulate polymer (Q)>

The particulate polymer (Q) was produced by performing operations in the same way as in Example 1 with the exception that in production of the particulate polymer, a colloidal dispersion liquid (Q) containing magnesium hydroxide was used instead of the colloidal dispersion liquid (A) containing magnesium hydroxide as a metal hydroxide. Note that the colloidal dispersion liquid (Q) containing magnesium hydroxide was produced by gradually adding an aqueous solution (Q2) of 5.6 parts of sodium hydroxide dissolved in 50 parts of deionized water to an aqueous solution (Q1) of 8 parts of magnesium chloride dissolved in 200 parts of deionized water under stirring.

### (Example 18)

Various operations, measurements, and evaluations were performed in the same way as in Example 1 with the exception that a particulate polymer (R) produced as described below was used instead of the particulate polymer (A) in production of the slurry composition. The results are shown in Table 1.

### <Production of particulate polymer (R)>

The particulate polymer (R) was produced by performing operations in the same way as in Example 1 with the exception that in production of the particulate polymer, the rotation speed of the disperser was changed from 12,000 rpm to 10,500 rpm.

### (Example 19)

Various operations, measurements, and evaluations were performed in the same way as in Example 1 with the exception that a particulate polymer (S) produced as described below was used instead of the particulate polymer (A) in production of the slurry composition and that a functional layer-equipped separator (laminate) including functional layers each having a heat-resistant fine particle layer thickness of 1.0 µm at both sides of a separator substrate was produced in production of the functional layer-equipped separator (laminate). The results are shown in Table 1.

### <Production of particulate polymer (S)>

The particulate polymer (S) was produced by performing operations in the same way as in Example 1 with the exception that in production of the particulate polymer, a colloidal dispersion liquid (S) containing magnesium hydroxide was used instead of the colloidal dispersion liquid (A) containing magnesium hydroxide as a metal hydroxide. Note that the colloidal dispersion liquid (S) containing magnesium hydroxide was produced by gradually adding an aqueous solution (S2) of 10.5 parts of sodium hydroxide dissolved in 50 parts of deionized water to an aqueous solution (S1) of 15.0 parts of magnesium chloride dissolved in 200 parts of deionized water under stirring.

### (Example 20)

Various operations, measurements, and evaluations were performed in the same way as in Example 1 with the exception that a particulate polymer (T) produced as described below was used instead of the particulate polymer (A) in production of the slurry composition and that a functional layer-equipped separator (laminate) including functional layers each having a heat-resistant fine particle layer thickness of 1.0 µm at both sides of a separator substrate was produced in production of the functional layer-equipped separator (laminate). The results are shown in Table 1.

### <Production of particulate polymer (T)>

The particulate polymer (T) was produced by performing operations in the same way as in Example 1 with the exception that in production of the particulate polymer, a colloidal dispersion liquid (T) containing magnesium hydroxide was used instead of the colloidal dispersion liquid (A) containing magnesium hydroxide as a metal hydroxide. Note that the colloidal dispersion liquid (T) containing magnesium hydroxide was produced by gradually adding an aqueous solution (T2) of 10.2 parts of sodium hydroxide dissolved in 50 parts of deionized water to an aqueous solution (T1) of 14.5 parts of magnesium chloride dissolved in 200 parts of deionized water under stirring.

### (Example 21)

Various operations, measurements, and evaluations were performed in the same way as in Example 1 with the exception that a particulate polymer (U) produced as described below was used instead of the particulate polymer (A) in production of the slurry composition. The results are shown in Table 1.

### <Production of particulate polymer (U)>

The particulate polymer (U) was produced by performing operations in the same way as in Example 1 with the exception that in production of the particulate polymer, a colloidal dispersion liquid (U) containing magnesium hydroxide was used instead of the colloidal dispersion liquid (A) containing magnesium hydroxide as a metal hydroxide. Note that the colloidal dispersion liquid (U) containing magnesium hydroxide was produced by gradually adding an aqueous solution (U2) of 5.3 parts of sodium hydroxide dissolved in 50 parts of deionized water to an aqueous solution (U1) of 7.6 parts of magnesium chloride dissolved in 200 parts of deionized water under stirring.

### (Example 22)

Various operations, measurements, and evaluations were performed in the same way as in Example 1 with the exception that a particulate polymer (V) produced as described below was used instead of the particulate polymer (A) in production of the slurry composition. The results are shown in Table 1.

### <Production of particulate polymer (V)>

The particulate polymer (V) was produced by performing operations in the same way as in Example 1 with the exception that in production of the particulate polymer, a colloidal dispersion liquid (V) containing magnesium hydroxide was used instead of the colloidal dispersion liquid (A) containing magnesium hydroxide as a metal hydroxide. Note that the colloidal dispersion liquid (V) containing magnesium hydroxide was produced by gradually adding an aqueous solution (V2) of 4.9 parts of sodium hydroxide dissolved in 50 parts of deionized water to an aqueous solution (V1) of 7.0 parts of magnesium chloride dissolved in 200 parts of deionized water under stirring.

### (Example 23)

Various operations, measurements, and evaluations were performed in the same way as in Example 1 with the exception that a slurry composition produced as described below was used in production of the functional layer-equipped separator (laminate). The results are shown in Table 1.

### <Production of slurry composition (composition for functional layer)>

The slurry composition was produced by performing operations in the same way as in Example 1 with the exception that alumina as heat-resistant particles was changed from 70 parts to 90 parts, the particulate polymer (A) was changed from 25 parts to 8.3 parts, and the binder (α) was changed from 5 parts to 1.7 parts in production of the slurry composition.

### (Example 24)

Various operations, measurements, and evaluations were performed in the same way as in Example 1 with the exception that a slurry composition produced as described below was used in production of the functional layer-equipped separator (laminate). The results are shown in Table 1.

### <Production of slurry composition (composition for functional layer)>

The slurry composition was produced by performing operations in the same way as in Example 1 with the exception that alumina as heat-resistant particles was changed from 70 parts to 50 parts, the particulate polymer (A) was changed from 25 parts to 41.7 parts, and the binder (α) was changed from 5 parts to 8.3 parts in production of the slurry composition.

### (Example 25)

Various operations, measurements, and evaluations were performed in the same way as in Example 1 with the exception that a slurry composition produced as described below was used in production of the functional layer-equipped separator (laminate). The results are shown in Table 1.

### <Production of slurry composition (composition for functional layer)>

The slurry composition was produced by performing operations in the same way as in Example 1 with the exception that the particulate polymer (A) was changed from 25 parts to 27 parts and the binder (α) was changed from 5 parts to 3 parts in production of the slurry composition.

### (Example 26)

Various operations, measurements, and evaluations were performed in the same way as in Example 1 with the exception that a slurry composition produced as described below was used in production of the functional layer-equipped separator (laminate). The results are shown in Table 1.

### <Production of slurry composition (composition for functional layer)>

The slurry composition was produced by performing operations in the same way as in Example 1 with the exception that the particulate polymer (A) was changed from 25 parts to 18 parts and the binder (α) was changed from 5 parts to 12 parts in production of the slurry composition.

### (Example 27)

Various operations, measurements, and evaluations were performed in the same way as in Example 1 with the exception that a particulate polymer (W) produced as described below was used instead of the particulate polymer (A) in production of the slurry composition. The results are shown in Table 1.

### <Production of particulate polymer (W)>

The particulate polymer (W) was produced by performing operations in the same way as in Example 1 with the exception that in production of the particulate polymer, cyclohexyl methacrylate as a cycloalkyl group-containing monomer was changed from 70 parts to 51 parts, glycidyl methacrylate as a glycidyl group-containing monomer was changed from 22 parts to 35 parts, styrene as an aromatic monovinyl monomer was not used, and 2-ethylhexyl acrylate as a mono(meth)acrylic acid ester monomer was changed from 4.7 parts to 13.7 parts.

### (Comparative Example 1)

Various operations, measurements, and evaluations were performed in the same way as in Example 1 with the exception that a water dispersion containing a particulate polymer (a) produced as described below was used instead of the water dispersion containing the particulate polymer (A) in production of the slurry composition. The results are shown in Table 1.

### <Production of water dispersion containing particulate polymer (a)>

A reactor including a stirrer was supplied with 70 parts of deionized water, 0.07 parts of sodium lauryl sulfate (EMAL^{®} 2F produced by Kao Corporation) as an emulsifier, and 0.3 parts of ammonium persulfate as a polymerization initiator. The gas phase was purged with nitrogen gas, and the temperature was raised to 60°C.

Meanwhile, a monomer composition (a) was produced in a separate vessel by mixing 50 parts of deionized water, 0.3 parts of sodium dodecylbenzenesulfonate as a dispersion stabilizer, 70 parts of cyclohexyl methacrylate as a cycloalkyl group-containing monomer, 22 parts of glycidyl methacrylate as a glycidyl group-containing monomer, 3 parts of styrene as an aromatic monovinyl monomer, 4.7 parts of 2-ethylhexyl acrylate as a mono(meth)acrylic acid ester monomer, and 0.3 parts of ethylene glycol dimethacrylate as a cross-linkable monomer.

The obtained monomer composition (a) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate polymer (a).

### (Comparative Example 2)

Various operations, measurements, and evaluations were performed in the same way as in Example 1 with the exception that a particulate polymer (b) produced as described below was used instead of the particulate polymer (A) in production of the slurry composition. The results are shown in Table 1.

### <Production of particulate polymer (b)>

The particulate polymer (b) was produced by performing operations in the same way as in Example 1 with the exception that in production of the particulate polymer, a colloidal dispersion liquid (b) containing magnesium hydroxide was used instead of the colloidal dispersion liquid (A) containing magnesium hydroxide as a metal hydroxide. Note that the colloidal dispersion liquid (b) containing magnesium hydroxide was produced by gradually adding an aqueous solution (b2) of 4.2 parts of sodium hydroxide dissolved in 50 parts of deionized water to an aqueous solution (b1) of 6.0 parts of magnesium chloride dissolved in 200 parts of deionized water under stirring.

### (Comparative Example 3)

Various operations, measurements, and evaluations were performed in the same way as in Example 1 with the exception that in production of the slurry composition, a water dispersion containing a particulate polymer (c) produced as described below was used instead of the water dispersion containing the particulate polymer (A), and the operations (A) were not performed with respect to the water dispersion containing the particulate polymer (c). The results are shown in Table 1.

### <Production of water dispersion containing particulate polymer (c)>

A reactor to which a stirrer, a reflux condenser, a dripping tank, and a thermometer had been attached was charged with 70.4 parts by mass of deionized water, 0.5 parts by mass of AQUALON KH1025^{®} (AQUALON KH1025 is a registered trademark in Japan, other countries, or both; produced by DKS Co., Ltd.; 25% aqueous solution) as an emulsifier, and 0.5 parts by mass of ADEKA REASOAP SR1025^{®} (ADEKA REASOAP SR1025 is a registered trademark in Japan, other countries, or both; produced by Adeka Corporation; 25% aqueous solution). Next, the internal temperature of the reactor was raised to 80°C and was held at a temperature of 80°C while 7.5 parts by mass of a 2% aqueous solution of ammonium persulfate was added. At 5 minutes after completion of addition of the ammonium persulfate aqueous solution, an emulsion obtained as described below was added dropwise into the reactor from the dripping tank over 150 minutes.

The emulsion was produced by using a homogenizing mixer to perform 5 minutes of mixing with respect to a mixture of 15 parts by mass of cyclohexyl methacrylate, 1 part by mass of methacrylic acid, 1 part by mass of acrylic acid, 0.1 parts by mass of acrylamide, 5 parts by mass of 2-hydroxyethyl methacrylate, 1.0 parts by mass of trimethylolpropane triacrylate, 4.9 parts by mass of methyl methacrylate, 1.0 parts by mass of n-butyl methacrylate, 1.0 parts by mass of n-butyl acrylate, 70 parts by mass of 2-ethylhexyl acrylate, 3 parts by mass of AQUALON KH1025^{®} (25% aqueous solution produced by DKS Co., Ltd.) as an emulsifier, 3 parts by mass of ADEKA REASOAP SR1025^{®} (25% aqueous solution produced by Adeka Corporation), 0.05 parts by mass of sodium p-styrenesulfonate, 3.75 parts by mass of a 2% aqueous solution of ammonium persulfate, and 52 parts by mass of deionized water.

Once dropwise addition of the emulsion was complete, the temperature of the inside of the reactor was held at 80°C for 90 minutes, and then cooling was performed to room temperature. The resultant emulsion was adjusted to pH 9.0 with ammonium hydroxide aqueous solution (25% aqueous solution) and was adjusted to a solid content concentration of 40% through addition of deionized water to yield a water dispersion containing a particulate polymer (c).

Note that "Other (*)" in Table 1 indicates methacrylic acid, acrylic acid, 2-hydroxyethyl methacrylate, trimethylolpropane triacrylate, methyl methacrylate, and n-butyl methacrylate.

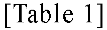

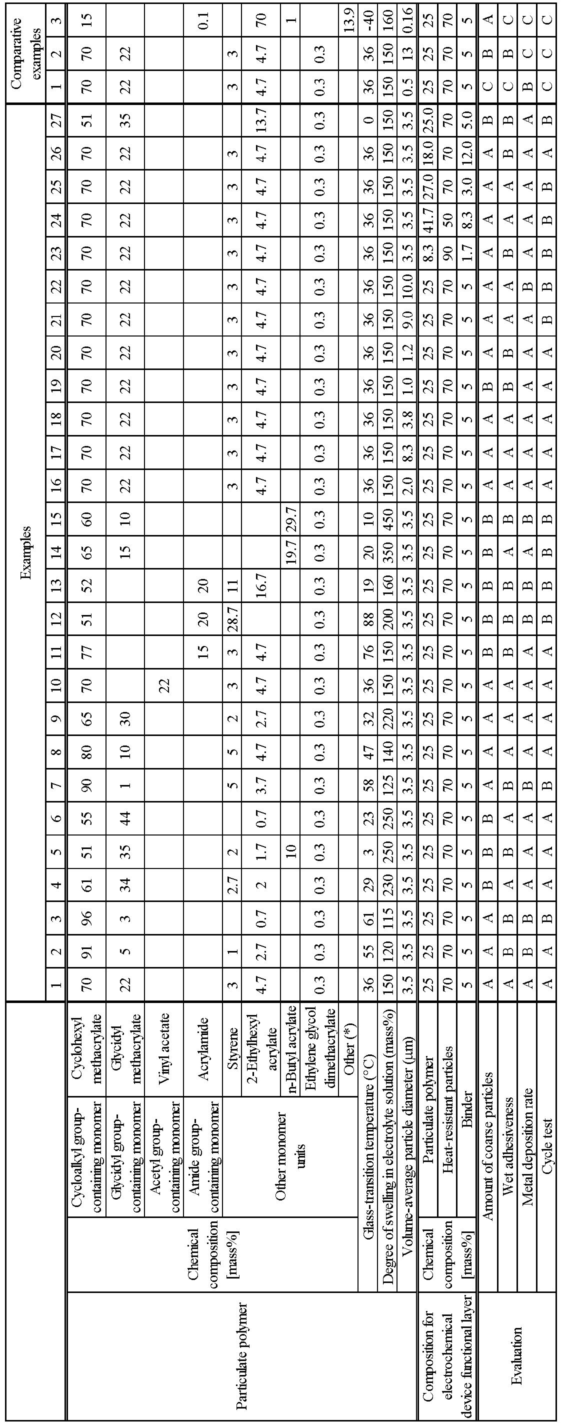

It is clear from Table 1 that a functional layer formed using the composition for an electrochemical device functional layer of any of Examples 1 to 27 has excellent wet adhesiveness and is also capable of good inhibition of metal deposition on an electrode during charging and discharging.

### INDUSTRIAL APPLICABILITY

According to the present disclosure, it is possible to provide a composition for an electrochemical device functional layer with which it is possible to form a functional layer that has excellent wet adhesiveness and that is also capable of good inhibition of metal deposition on an electrode during charging and discharging. Moreover, according to the present disclosure, it is possible to provide a functional layer for an electrochemical device that has excellent wet adhesiveness and that is also capable of good inhibition of metal deposition on an electrode during charging and discharging. Furthermore, according to the present disclosure, it is possible to provide a laminate for an electrochemical device in which this functional layer for an electrochemical device is stacked. Also, according to the present disclosure, it is possible to provide an electrochemical device including this laminate for an electrochemical device.

## Claims

1. A composition for an electrochemical device functional layer comprising a particulate polymer, wherein
the particulate polymer includes a cycloalkyl group-containing monomer unit and at least one monomer unit (A) selected from the group consisting of a glycidyl group-containing monomer unit, an acetyl group-containing monomer unit, and an amide group-containing monomer unit, and
the particulate polymer has a volume-average particle diameter of not less than 1.0 µm and not more than 10.0 µm.

2. The composition for an electrochemical device functional layer according to claim 1, wherein the particulate polymer has a glass-transition temperature of not lower than 0°C and not higher than 90°C.

3. The composition for an electrochemical device functional layer according to claim 1, wherein the particulate polymer includes the cycloalkyl group-containing monomer unit in a proportion of not less than 51 mass% and not more than 99 mass%.

4. The composition for an electrochemical device functional layer according to claim 1, wherein the particulate polymer has a degree of swelling in electrolyte solution of not less than 100% and not more than 500%.

5. The composition for an electrochemical device functional layer according to claim 1, further comprising heat-resistant particles.

6. A functional layer for an electrochemical device formed using the composition for an electrochemical device functional layer according to any one of claims 1 to 5.

7. A functional layer for an electrochemical device formed using the composition for an electrochemical device functional layer according to claim 5, wherein
the functional layer for an electrochemical device has a structure in which the particulate polymer is partially embedded in a heat-resistant particle layer containing the heat-resistant particles, and
a ratio of a number-average particle diameter of the particulate polymer relative to thickness of the heat-resistant particle layer is not less than 1.0 and not more than 5.0.

8. A laminate for an electrochemical device comprising the functional layer for an electrochemical device according to claim 6, stacked on a substrate.

9. An electrochemical device comprising the laminate for an electrochemical device according to claim 8.
